# EUROPEAN PATENT APPLICATION

(11) **EP 3 196 824 A1**
(43) Date of publication of application: **26.07.2017**
(21) Application number: 16845354.6
(22) Date of filing: 18.11.2016
(51) Int. Cl.: G06Q 30/02

(54) **INFORMATION PROCESSING SYSTEM AND METHOD**

(30) Priority: 26.11.2015 JP 2015230890
(71) Applicant: Hakuhodo Dy Holdings Inc., Tokyo 107-6322 (JP)
(72) Inventor: TOKUHISA, Shinya, Tokyo 1076322 (JP); TSUJITA, Toshihiro, Tokyo 1076322 (JP); OKUNO, Kaho, Tokyo 1076322 (JP); SAKAI, Yoshiki, Tokyo 1076322 (JP)
(74) Representative: Kent, Josephine
(86) International application number: PCT/JP2016/084336
(87) International publication number: WO 2017/090539

(57) **Abstract**

A system according to one aspect of the present disclosure comprises an acquisition unit, a determination unit, and an output unit. The acquisition unit acquires a list of consumers selected from a first consumer group. The determination unit determines, based on first and second databases, consumers in a second consumer group at least similar in feature to the consumers represented in the list as targets. The first and the second databases respectively represent features related to consumption behavior of each of consumers belonging to the first and the second consumer groups. The output unit outputs data representing one of tendency or behavior history of the targets.

## Description

### CROSS-REFERENCE TO RELATED APPLICATION

This international application claims the benefit of Japanese Patent Application No. 2015-230890 filed on November 26, 2015 with the Japan Patent Office, and the entire disclosure of Japanese Patent Application No. 2015-230890 is incorporated herein by reference.

### TECHNICAL FIELD

The present disclosure is related to system and method for information processing.

### BACKGROUND ART

Conventionally, advertisement distribution systems through websites have been known. For example, an advertisement distribution system has been known in which advertisement provided by an advertisement owner is distributed to users through websites based on prespecified distribution conditions (see, for example, Patent Document 1). Distribution conditions are defined by, for example, one or more of URLs, keywords, and categories specified by an advertisement owner.

### PRIOR ART DOCUMENTS

### PATENT DOCUMENTS

Patent Document 1: Japanese Unexamined Patent Application Publication No. 2007-516522

### SUMMARY OF THE INVENTION

### PROBLEMS TO BE SOLVED BY THE INVENTION

An advertisement owner can have advertisement beneficially distributed by suitably specifying one or more of URLs, keywords, and categories that define the above-described distribution conditions in an advertisement distribution system.
However, with conventional technique, distribution conditions are specified by a simple approach such as by specifying URLs of websites providing sports related contents for advertisement of sports equipment, and/or by specifying sports related categories. This type of specifying approach is an intuitive approach rather than logical and/or technical, and thus is difficult to achieve high advertisement effect.

Accordingly, one aspect of the present disclosure desirably provide a system and method for information processing that can provide information useful for consumer targeting by a logical and/or technical approach.

### MEANS FOR SOLVING THE PROBLEMS

A system for information processing according to one aspect of the present disclosure comprises an acquisition unit, a determination unit, and an output unit. The acquisition unit is configured to acquire a consumer list that is a list of consumers selected from a first consumer group. The determination unit is configured to determine, based on a first database related to the first consumer group and a second database related to a second consumer group, consumers in the second consumer group at least similar in feature to the consumers represented in the consumer list as targets. The concept of "at least similar" may be understood to include the concept of "identical".

The first database represents features related to consumption behavior of each of the consumers belonging to the first consumer group. The second database represents features related to consumption behavior of each of the consumers belonging to the second consumer group. The second consumer group may be a consumer group different from the first consumer group. The consumption behavior may include, for example, purchasing behavior and usage behavior of consumers.

The output unit is configured to output, based on data representing one of tendency or behavior history of each of the consumers belonging to the second consumer group, data representing one of tendency or behavior history of the targets as target related data.

According to one aspect of the present disclosure, the acquisition unit may be configured to acquire a consumer list, which is a list of consumers in the first consumer group who show specific consumption behavior, as the above-described consumer list. "Consumer" may be defined as an individual, or a cluster consisting of a group of people. The first and the second consumer groups may be each a group of consumers defined on an individual basis or on a cluster basis, or a group of consumers defined on an individual basis and on a cluster basis being mixed therein.

According to one aspect of the present disclosure, each of the first and the second databases may be a database representing features related to consumption behavior on the individual basis, features related to consumption behavior on the cluster basis, or features related to consumption behavior on the individual basis and the cluster basis as features related to consumption behavior of each of the consumers belonging to the corresponding consumer group.

According to one aspect of the present disclosure, at least one of the first or the second databases may have processed data for privacy protection. For example, at least one of the first or the second databases may be configured to have features related to consumption behavior of at least some consumers as anonymous data. At least one of the first or the second databases may be configured to have data for each cluster in which features of people belonging to a cluster is statistically processed. It can be said that this data is data that represents features related to consumption behavior of a virtual person corresponding to a cluster.

According to the system for information processing as described above, for example, a user or a device can provide a consumer list to the system for information processing. In the consumer list, consumers determined to be advertisement distribution targets are listed based on consumption behavior of each of the consumers indicated in the first database. In this case, in response to the consumer list, the user or the device can acquire data, representing one of tendency or behavior history of consumers at least similar to the consumers in the consumer list, from the system for information processing. Based on the acquired data, the user or the device can target consumers in a group different from the first consumer group for advertisement distribution. Accordingly, the system for information processing according to one aspect of the present disclosure enables to provide useful information for consumer targeting by a logical or technical approach.

According to one aspect of the present disclosure, the data representing one of tendency or behavior history of each of the consumers belonging to the second consumer group may be history data representing at least one of access history of each of the consumers belonging to the second consumer group to information media or access history of each of the consumers belonging to the second consumer group to locations. In this case, the output unit may be configured to output, based on the history data of each of the consumers belonging to the second consumer group, the history data representing the access history of the targets, as the target related data.

According to one aspect of the present disclosure, the access history to the information media may include access history to at least one of electronic information media or non-electronic information media. The access history to the locations may include access history to locations on at least one of a real space or an on-line space. The above-described history data may be incorporated in the second database, or may be provided as a database separate from the second database.

According to one aspect of the present disclosure, the first database may be a database representing features related to demographic attributes and consumption behavior of each of the consumers belonging to the first consumer group. The first database may comprise, for each of the consumers belonging to the first consumer group, feature data representing features related to demographic attributes and consumption behavior of the consumer.

Similarly, the second database may be a database representing features related to demographic attributes and consumption behavior of each of the consumer belonging to the second consumer group. The second database may comprise, for each of the consumers belonging to the second consumer group, feature data representing features related to demographic attributes and consumption behavior of the consumer.

According to one aspect of the present disclosure, the determination unit may have a combining function with which the first database and the second database are combined by combining the feature data of consumers at least similar in feature between the first database and the second database. The determination unit may be configured to determine, based on database combined by the combining function, consumers corresponding to the feature data in the second database combined with the feature data of the consumers represented in the consumer list as the targets.

According to one aspect of the present disclosure, the output unit may be configured to make a ranking of, among access destinations including at least one of one or more information media or one or more locations, the access destinations accessed more by the targets in the second consumer group in terms of access dependency based on the above-described history data, in a descending order from the access destinations with higher degrees of access dependency by the above-described targets.. The output unit may be configured to make a ranking of the access destinations accessed more by the above-described targets, in comparison in access amounts to the access destinations with one of an entirety of the second consumer group or the consumers belonging to the second consumer group excluding the targets, in a descending order from the access destinations with higher access amounts by the above-described targets.

The output unit may be configured to output data including information on the ranking as the target related data that represents the access history of the target. The output unit may be configured to output data, representing access history to the access destinations with rankings higher than a reference, as the target related data.

The above-described history data may be data representing access history with identification codes that can identify consumers, i.e., access sources, and access destinations.

In addition, the above-described electronic information media may be web data. In this case, the target related data may be history data representing access history of the targets to the web data. The history data may be data representing access history with at least one of Cookies, issued when web data are accessed, or URLs of web data providing sources.

According to one aspect of the present disclosure, the system for information processing may comprise a setting unit that performs, based on the target related data outputted from the output unit, setting for advertisement distribution with respect to an advertisement distribution system that distributes advertisement through websites. The setting unit may be configured to perform the setting to the advertisement distribution system such that, for example, advertisement is distributed through at least one of advertisement frames of websites that provide web data having access history by the targets or advertisement frames of websites that provide web data related to the aforementioned web data.

According to one aspect of the present disclosure, setting distribution conditions to the advertisement distribution system may be achieved by a user's manual input. A user may specify, based on the target related data, suitable distribution conditions to the advertisement distribution system that distributes advertisement through websites in consideration of the behavior of consumers on a network.

If the target related data is history data representing access history to electronic information media by the targets, the setting unit may be configured to perform setting for advertisement distribution to an advertisement distribution system that distributes advertisement through information media, based on the target related data outputted from the output unit such that advertisement is distributed through an advertisement frames of at least one of information media having access history by the targets or related information media.

According to one aspect of the present disclosure, the data representing one of tendency or behavior history of each of the consumers belonging to the second consumer group may be tendency data that represents at least one of interest or preference of each of the consumers belonging to the second consumer group. In this case, the output unit may be configured to output, based on the tendency data of each of the consumers belonging to the second consumer group, a list of at least one of interest or preference which the targets are estimated to have as the target related data.

In one example, a user or a device may create a consumer list in which consumers of advertisement targets are listed based on the consumption behavior indicated by the first database, and provide the list to the system for information processing to acquire a list related to at least one of interest or preference corresponding to the aforementioned consumers. In this case, the user or the device may perform setting for advertisement distribution to the advertisement distribution system based on the acquired list such that advertisement is distributed to suitable consumers including potential purchasers.

According to one aspect of the present disclosure, the above-described tendency data may be data that represents, for each of predetermined categories, a degree of interest or preference of the consumers to the category. In this case, the output unit may be configured to make a ranking of, among the categories, the categories with higher degree of interest or preference by the targets, in comparison with one of an entirety of the second consumer group or the consumers belonging to the second consumer group excluding the targets based on the tendency data, in a descending order from categories with higher degree of interest or preference by the targets.

According to one aspect of the present disclosure, the output unit may be configured to output a list of the categories including information on the above-described ranking as the list of at least one of interest or preference that the targets are estimated to have. The output unit may be configured to output a list of the categories with the above-described rankings higher than a reference as the list of at least one of interest or preference that the targets are estimated to have. Additionally, the output unit may be configured to output the list along with information representing demographic attributes of the targets.

According to one aspect of the present disclosure, the system for information processing may comprise a first combining unit, a second combining unit, an acquisition unit, and an output unit. The first combining unit may be configured to combine a first database comprising, for each of the consumers belonging to a first consumer group, feature data representing features related to demographic attributes and consumption behavior of the consumer and a second database comprising, for each of the consumers belonging to a second consumer group that is different from the first consumer group, feature data representing features related to demographic attributes, consumption behavior, and at least one of interest or preference of the consumer. The first combining unit may be configured to combine the first database and the second database by combining feature data of consumers at least similar in feature related to the demographic attributes and the consumption behavior between the first database and the second database.

The second combining unit may be configured to combine a third database comprising, for each of the consumers belonging to a third consumer group that is different from the first consumer group and the second consumer group, feature data representing features related to demographic attributes and at least one of interest or preference of the consumer with the second database. Specifically, the second combining unit may be configured to combine the second database and the third database by combining feature data of consumers at least similar in feature related to the demographic attributes and the at least one of interest or preference between the second database and the third database.

The acquisition unit may be configured to acquire a consumer list that is a list of consumers selected from the first consumer group. The output unit may be configured to output a list of at least one of interest or preference associated with the consumers represented in the consumer list in the database combined by the first combining unit and the second combining unit.

According to one aspect of the present disclosure, the system for information processing may be configured to comprise a combining unit, an acquisition unit, and an output unit. The combining unit may be configured to combine a first database comprising, for each of the consumers belonging to a first consumer group, feature data representing features related to demographic attributes and consumption behavior of the consumer and a second database comprising, for each of the consumers belonging to a second consumer group that is different from the first consumer group, feature data representing features related to demographic attributes and at least one of interest or preference of the consumer. Specifically, the combining unit may be configured to combine the first database and the second database by combining feature data of consumers at least similar in feature related to the demographic attributes between the first database and the second database.

The acquisition unit may be configured to acquire a consumer list that is a list of consumers selected from the first consumer group. The output unit may be configured to output a list of at least one of interest or preference associated with the consumers represented in the consumer list in the database combined by the combining unit.

According to one aspect of the present disclosure, based on the above-described list of at least one of interest and preference, setting for advertisement distribution can be performed with respect to the advertisement distribution system such that advertisement is distributed to suitable consumers including potential purchasers.

The function that the above-described information processing system comprises may be partially or entirely achieved by a dedicated hardware or may be achieved by a program. With the program, a computer can achieve the function of each of the above-described units of the system for information processing. These functions may be achieved by several computers.

A program may be provided to a computer to cause the computer to perform the function of at least one of the above-described units that the system for information processing comprises. The program may be stored in a computer-readable non-transitory tangible storage medium such as a semiconductor memory, a magnetic disc, and optical disc. According to one aspect of the present disclosure, a system for information processing comprising a computer (processor) and a memory may be provided in which the memory stores the program.

According to one aspect of the present disclosure, a method for outputting the above-described target related data may be provided. For example, a method may be provided, comprising: acquiring a consumer list that is a list of consumers selected from a first consumer group; determining, based on a first database and a second database, consumers in a second consumer group at least similar in feature to the consumers represented in the consumer list as targets, the second consumer group being different from the first consumer group, the first database representing features related to consumption behavior of each of the consumers belonging to the first consumer group, the second database representing features related to consumption behavior of each of the consumers belonging to the second consumer group; and outputting, based on data representing one of tendency or behavior history for each of the consumers belonging to the second consumer group, data representing one of tendency or behavior history of the targets as target related data.

According to one aspect of the present disclosure, a method may be provided, comprising: combining a first database and a second database, the first database comprising, for each of the consumers belonging to a first consumer group, feature data representing features related to demographic attributes and consumption behavior of the consumer, the second database comprising, for each of the consumers belonging to a second consumer group that is different from the first consumer group, feature data representing features related to demographic attributes, consumption behavior, and at least one of interest or preference of the consumer, wherein feature data of consumers at least similar in feature related to the demographic attributes and the consumption behavior between the first database and the second database are combined; combining the second database and a third database, the third database comprising, for each of the consumers belonging a third consumer group that is different from the first consumer group and the second consumer group, feature data representing features related to demographic attributes and at least one of interest or preference of the consumer, wherein feature data of consumers at least similar in feature related to the demographic attributes and at least one of the interest or the preference between the second database and the third database are combined; acquiring a consumer list that is a list of consumers selected from the first consumer group; and outputting a list of at least one of interest or preference associated with the consumers represented in the consumer list in the combined database.

According to one aspect of the present disclosure, a method may be provided, comprising: combining a first database and a second database, the first database comprising, for each of the consumers belonging to a first consumer group, feature data representing features related to demographic attributes and consumption behavior of the consumer, the second database comprising, for each of the consumers belonging to a second consumer group that is different from the first consumer group, feature data representing features related to demographic attributes and at least one of interest or preference of the consumer, wherein feature data of consumers at least similar in feature related to the demographic attributes between the first database and the second database are combined; acquiring a consumer list that is a list of consumers selected from the first consumer group; and outputting a list of at least one of interest or preference associated with the consumers represented in the consumer list in the combined database. These methods may be methods performed by a computer. A program for causing a computer to perform these methods may be provided. A non-transitory tangible recording medium in which the program is stored may be provided.

### BRIEF DESCRIPTION OF THE DRAWINGS

FIG. 1 is a block diagram showing the structure of an information processing system;
FIG. 2 is a function block diagram illustrating function realized by a processing device according to a first embodiment;
FIG. 3 is a diagram showing an example of a configuration of a first purchase database;
FIG. 4 is a diagram showing an example of a configuration of a second purchase database;
FIG. 5 is a diagram showing an example of a configuration of a combined database according to the first embodiment;
FIG. 6 is a diagram showing an example of a configuration of a web access database;
FIG. 7 is a flowchart illustrating a process executed by an extraction processor;
FIG. 8 is an explanatory diagram related to a ranking according to the first embodiment;
FIG. 9 is a function block diagram illustrating function realized by a processing device according to a second embodiment;
FIG. 10 is a diagram showing an example of a configuration of an affinity database;
FIG. 11 is an explanatory diagram related to combining of the second purchase database and the affinity database;
FIG. 12 is a diagram showing a configuration of a combined database according to the second embodiment;
FIG. 13 is a flowchart illustrating a process executed by a category list generation processor;
FIG. 14 is an explanatory diagram related to a ranking according to the second embodiment; and
FIG. 15 is a diagram showing a configuration of a combined database in a variation.

### EXPLANATION OF REFERENCE NUMERALS

1...information processing system, 11...processing device, 13...input device, 15...display device, 17...storage device, 19...communication device, 31...target selection processor, 33...data fusion processor, 35...replacement processor, 37...extraction processor , 39...distribution setting processor, 41...first purchase database, 43... second purchase database, 45...web access database, 46...history database, 47...affinity database, 51...first target list, 53...combined database, 55...second target list, 57...target history data, 61...target selection processor, 63...data fusion processor, 67...category list generation processor, 69...distribution setting processor, 71...target list, 73, 74...combined database, 77...category list, 111...CPU, 113...RAM, 631...first processor, 633...second processor

### MODE FOR CARRYING OUT THE INVENTION

Hereinafter, exemplary embodiments of the present disclosure will be described in detail with reference to the drawings.

### [First Embodiment]

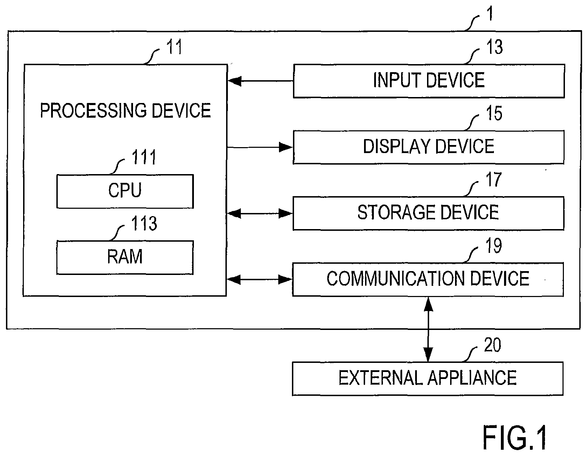

An information processing system 1 according to the present embodiment is configured with a program, to which the technology according to the present disclosure is applied, being installed in a general-purpose computer. This information processing system 1 comprises, as shown in FIG. 1, a processing device 11, an input device 13, a display device 15, a storage device 17, and a communication device 19.

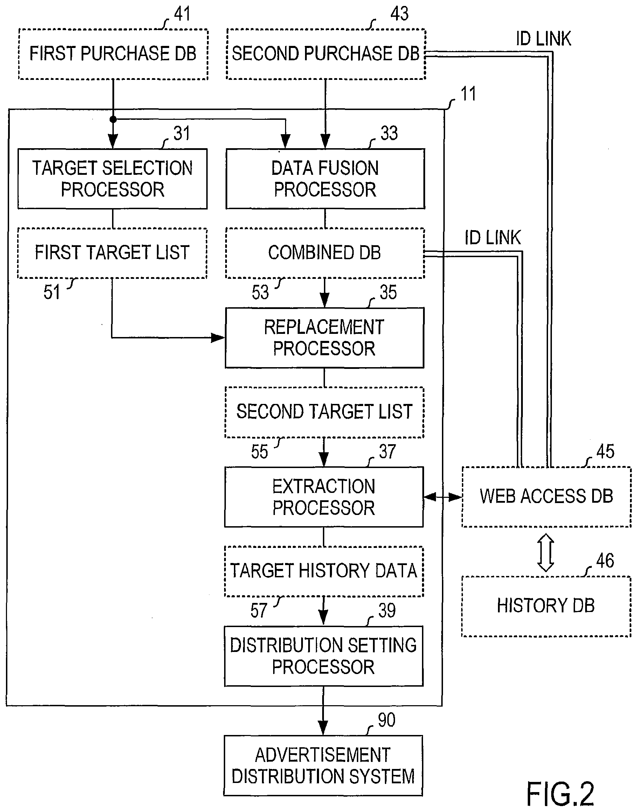

The processing device 11 comprises a CPU 111 that executes processes in accordance with various programs and a RAM 113 used as a work memory when a process is executed by the CPU 111. By the CPU 111 executing the processes in accordance with the various programs, the processing device 11 serves as the processors shown in FIG. 2.

The input device 13 is configured to be able to receive an input operation from a user. The input device 13 comprises one or more of, for example, a keyboard and a pointing device. The display device 15 is configured to be able to display various information for a user. The display device 15 is composed of, for example, a liquid crystal display.

The storage device 17 is configured to store various programs executed by the CPU 111 and various data used with the programs. The storage device 17 comprises one or more of, for example, a hard disc device and a flash memory.

The communication device 19 is configured to be capable of bidirectional communication with an external appliance 20. The communication device 19 comprises one or more of, for example, a LAN (Local Area Network) interface and a USB (Universal Serial Bus) interface. The information processing system 1 is configured, by comprising the communication device 19, to acquire various data through a network from an external server, which is one example of the external appliance 20, and/or to directly obtain various data from an external storage, which is one example of the external appliance 20.

Subsequently, the function of the processing device 11 will be described with reference to FIG. 2. By executing the programs to which the technology according to the present disclosure is applied, the processing device 11 serves as a target selection processor 31, a data fusion processor 33, a replacement processor 35, an extraction processor 37, and a distribution setting processor 39.

The target selection processor 31 is configured to select consumers, showing consumption behavior that satisfies the conditions specified from a user through the input device 13, from a first consumer group as advertisement distribution targets (targets), and to create a first target list 51 that is a list of selected consumers. The first consumer group is a group of consumers whose consumer data are registered in a first purchase database 41.

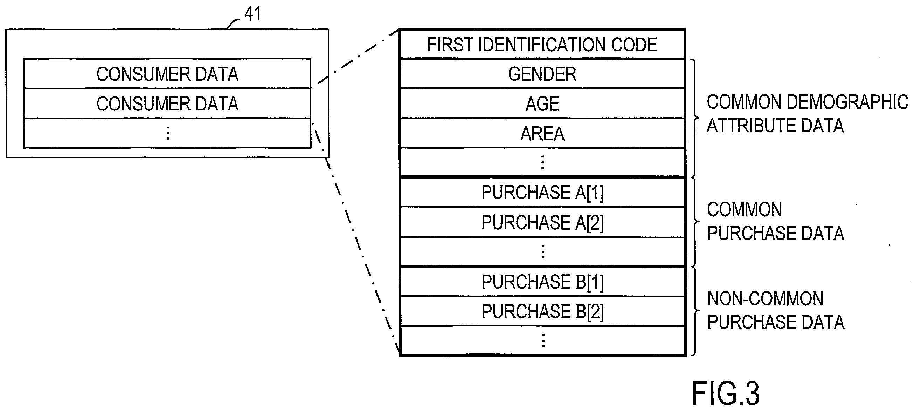

The first purchase database 41 is a database that represents the consumption behavior (specifically, purchasing behavior) of each consumer belonging to the first consumer group, and, as shown in FIG. 3, comprises consumer data for each consumer. The consumer data comprises an identification code of a consumer (hereinafter, to be expressed as "first identification code"), attribute data representing demographic attributes of the consumer, and purchase data representing the feature in the purchasing behavior of the consumer. The first purchase database 41 is, for example, created based on data acquired through an ID-POS system. In this case, the first consumer group corresponds to a consumer group in which consumers are assigned with IDs in the ID-POS system.

The consumer data of the first purchase database 41 shown as an example in FIG. 3 has parameters representing the gender, age, and area of the consumer as the demographic attributes of the consumer. Moreover, this consumer data comprises parameters representing, for each product in predetermined products A[1], A[2], ..., B[1], B[2], ..., the presence or absence of purchase or the amount of purchase of the product by the consumer. The consumer data may include additional information such as the date and the time, the amount of money, and the location of the purchase of the product.

In an attempt to distribute advertisement for, for example, sports equipment, a user can input the information to specify consumers with purchase history of sports equipment as advertisement distribution targets into the information processing system 1. In this case, the target selection processor 31 may refer to the first purchase database 41 and select consumers with purchase history of sports equipment from the first consumer group as advertisement distribution targets. The target selection processor 31 creates the first target list 51, in which the first identification code assigned to each of the selected consumers is written, and inputs the first target list 51 into the replacement processor 35.

The data fusion processor 33 is configured to combine the above-described first purchase database 41 and a second purchase database 43 based on the known data fusion technology. The second purchase database 43 is a database that represents the consumption behaviors of consumers belonging to a second consumer group that is different from the first consumer group, and comprises consumer data for each consumer. The second consumer group may include a part of consumers who also belong to the first consumer group.

The second consumer group is different from the first consumer group in that the group consists of consumers who have agreed to multidimensional data collection. The multidimensional data includes data related to purchasing behaviors, data related to on-line behaviors, and data related to consciousness surveys. The web access database 45 shown in FIG. 2 has access history data for each of the consumers belonging to the second consumer group, and the access history data shows the history of accessing websites, which is one of the on-line behavior history. This access history corresponds to the viewing history of web pages. It is possible to request the consumers belonging to the second consumer group to install a program exclusively for the collecting the access history into their communication terminals. That is, the access history can be collected through the exclusive program installed in the communication terminals of the consumers belonging to the second consumer group.

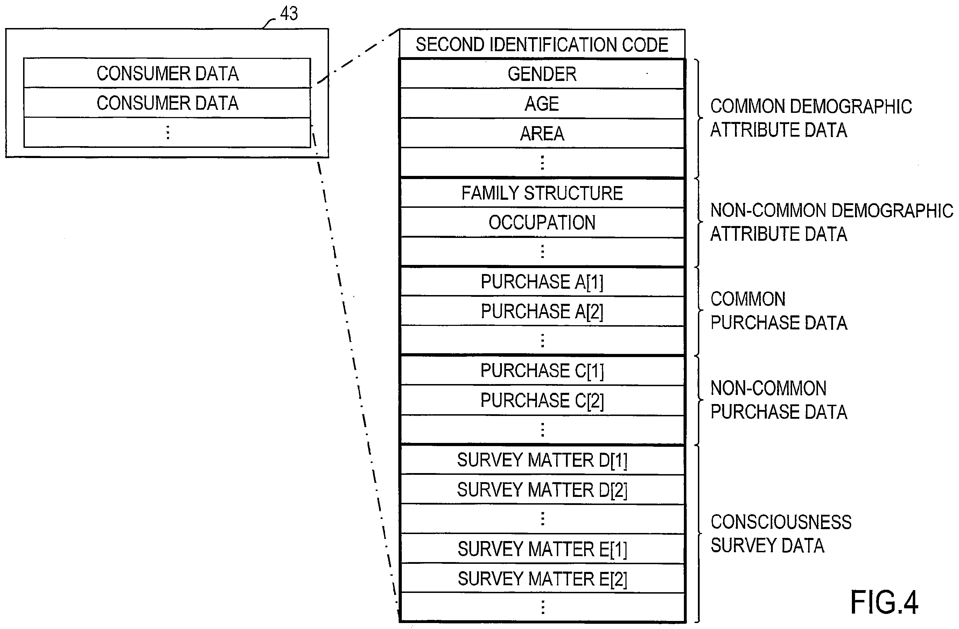

The consumer data on each of the consumers in the second purchase database 43 includes, as shown in FIG. 4, an identification code of the consumer (hereinafter, to be expressed as "the second identification code"), attribute data, representing the demographic attributes of the consumer, purchase data, representing the feature of the purchasing behavior of the consumer, and consciousness survey data representing the feature of the consumer consciousness. The information on the consumer consciousness can be acquired from the consumers through questioners or conversation.

The consumer data in the second purchase database 43, illustrated in FIG. 4 as an example, comprises parameters representing the gender, age, and area that are the demographic attributes of the consumer in common with those in the first purchase database 41. In addition, the consumer data has parameters of the demographic attributes of the consumer that are non-common with the demographic attributes in the first purchase database 41. The non-common parameters, illustrated in FIG. 4 as an example, include parameters representing the family structure and the occupation.

The consumer data in the second purchase database 43 further comprises purchase data on the products A[1], A[2], ... that is in common with the purchase data in the first purchase database 41, and additionally comprises purchase data on products C[1], C[2], ... that is non-common with the purchase data in the first purchase database 41. That is, this consumer data comprises, for each of the predetermined products A[1], A[2], ..., C[1], C[2], ..., parameters representing the presence or absence of purchase or the amount of purchase of the product by the consumer.

The consumer data in the second purchase database 43 further has, as the consciousness survey data, parameters representing the survey result of each survey matter. These survey matters include survey matters related to media contact. Furthermore, the survey matters include survey matters related to "preference", such as hobbies and taste, and survey matters related to interest. The parameters for the survey matters related to media contact may be, for example, parameters representing the presence or absence of contact (subscription) with each of the predetermined media (newspapers and magazines etc.). The parameters for the survey matters related to preference and interest may be, for example, parameters representing the presence, absence, or degree of preference and interest of the consumer with respect to each of the predetermined categories.

The data fusion processor 33 combines the first purchase database 41, having the above-described configuration, and the second purchase database 43 based on the known data fusion technology. The data fusion processor 33 may refer to the parameters that the consumer data in the first purchase database 41 and the consumer data in the second purchase database 43 commonly have. The data fusion processor 33 may combine the first purchase database 41 and the second purchase database 43 by using these common parameters as margins, such that, the consumer data similar in feature of the consumers represented by the common parameters between the first purchase database 41 and the second purchase database 43 are combined. Thereby, the data fusion processor 33 may create a combined database 53 that is a database after the combining. Being "similar" as used herein may be understood as a simple expression for being "at least similar" and understood to include a word "identical". According to the examples shown in FIG. 3 and FIG. 4, the common parameters are parameters shown in these figures as common demographic attribute data and common purchase data.

Various technologies are known as the data fusion technology. According to a simple data fusion technology, similar consumer data can be combined as follows. For example, the distance (e.g., cosine distance) between feature vectors having the common parameters for evaluating the degree of similarity as elements when the feature vectors are arranged on a feature space is calculated for all combinations of the consumer data. By matching the feature vectors having the shortest distance therebetween, the first purchase database 41 and the second purchase database 43 can be combined in a manner so as to combine consumer data similar in consumer feature represented by the common parameters. When the degree of similarity between two consumer data is evaluated by the distance on the feature space, a solution of the transportation problem may be used to perform matching of the feature data between the databases 41, 43 so that a transportation cost is "minimum as a whole".

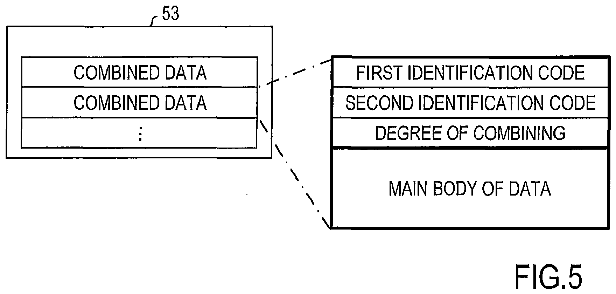

The combined database 53 created by such matching is configured as a database in which, for example, as shown in FIG. 5, the consumer data in the first purchase database 41 and the consumer data in the second purchase database 43, which are in a combined relation, are expressed in association with identification codes. That is, the combined database 53 is configured such that, in association with the identification codes of the consumer data in the first purchase database 41 (the first identification codes), the identification codes of the consumer data of the second purchase database 43 (the second identification codes) that is combined with the aforementioned consumer data are written. Based on the associated first identification codes and the second identification codes, the processing device 11 may refer to the first purchase database 41 and the second purchase database 43 so as to cross-refer to the consumer data of the consumers with similar feature between in the first consumer group and in the second consumer group.

According to the example shown in FIG. 5, the combined database 53 comprises combined data for each combination of combined consumer data. The combined data has the first identification codes and the second identification codes of the combined consumer data and parameters representing the degree of combination between the consumer data. According to the known data fusion technology, one of consumer data can be divided and combined with a plurality of consumer data different from the one of consumer data. The degree of combination represents the ratio of the divided and combined consumer data with respect to the original data. Each of the combined data included in the combined database 53 may be configured to have or not to have the main body of the combined consumer data as shown in FIG. 5. The combined database 53 created by the data fusion processor 33 may be temporarily stored in the RAM 113, or stored in the storage device 17.

In order to replace the consumers, who are the advertisement distribution targets selected in the first consumer group, with the consumers in the second consumer group having access history data in the web access database 45, the replacement processor 35 replaces each of the first identification codes of the consumers, indicated in the first target list 51 created by the target selection processor 31, with the identification code of a consumer in the second consumer group (the second identification codes) who have similar feature.

For each of the first identification codes indicated in the first target list 51, the replacement processor 35 can identify the second identification code of the consumer data that is combined with the consumer data of the aforementioned first identification code with reference to the combined database 53. This identification enables the replacement processor 35 to determine consumers in the second consumer group who are similar to the consumers indicated in the first target list 51 in feature of the demographic attributes and the purchasing behavior. The above-described replacement can be realized by creating the second target list 55 in which the identified second identification codes are listed. This second target list 55 indicates the consumers in the second consumer group who correspond to the consumers selected from the first consumer group indicated in the first target list 51 as the advertisement distribution targets and have similar feature to the advertisement distribution targets regarding demographic attributes and purchasing behavior.

Based on this second target list 55, the extraction processor 37 extract the access history data of the consumers indicated in the second target list 55 from the web access database 45. The extraction processor 37 is configured to, based on the extracted access history data, create and output target history data 57 representing the access history of the consumers, who are the advertisement distribution targets, to web pages.

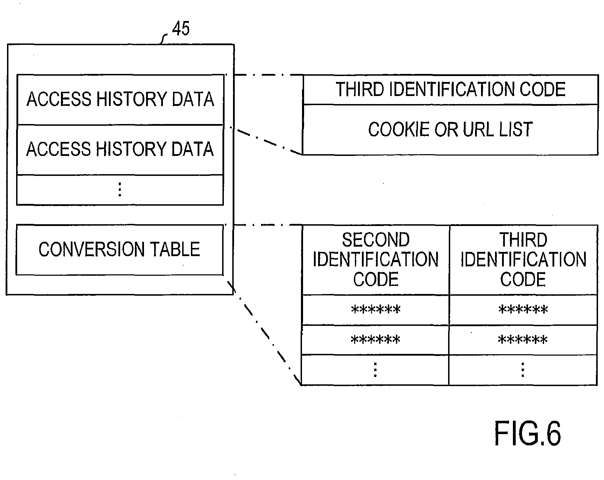

As shown in FIG. 6, the web access database 45 has, for each of the consumers in the second consumer group, a list of Cookies (Cookie) exchanged between the web browser of the consumer and websites as the access history data representing the access history to web pages. Alternatively, the web access database 45 has, for each of the consumers in the second consumer group, a list of URLs of the web pages accessed by the consumer's web browser as the access history data. The Cookies and the URLs are both information that can identify the web pages accessed by the consumer. The access history data of each of the consumers is configured to be related to an identification code of the corresponding consumer (hereinafter, third identification code).

The third identification code may be an identification code identical to or different from the second identification code. In a case where the targets for collecting the access history include consumers other than the consumers belonging to the second consumer group, each of the targets for collecting the access history may be assigned with a third identification code that is different from the second identification code. In a case where the identification code used in the second purchase database 43 (the second identification code) and the identification code used in the web access database 45 (the third identification code) are different, the web access database 45 may have a conversion table in which the relationship between the second identification code and the third identification code is stored. The conversion table may be configured to store the second identification code and the third identification code of the consumer in a related manner for each of the consumers belonging to the second consumer group.

The extraction processor 37 may refer to the web access database 45 configured as above, and extract the access history data of the consumer corresponding to the second identification code indicated on the second target list 55 from the web access database 45.

The extraction processor 37 may create and output data in which the list of Cookies or URLs indicated by the access history data that correspond to the consumers indicated in the second target list 55 is stored, as the target history data 57. The extraction processor 37 may be configured to show the created target history data 57 to a user through the display device 15, or to save the created target history data 57 in the storage device 17.

The target history data 57 may be configured such that a list of Cookies or URLs is individually written for each of the consumers, or such that Cookies or URLs are written altogether for the consumers indicated on the second target list 55. The target history data 57 may include, for each of the web pages corresponding to the Cookies or the URLs, information that can identify the amount of access to the web page by the consumers indicated on the second target list 55 (for example, the number of accesses or the number of consumers).

The distribution setting processor 39 is configured to perform setting with respect to the advertisement distribution system 90 for advertisement distribution based on the target history data 57 provided by the extraction processor 37 so that advertisement is distributed through advertisement frames in the web pages corresponding to the Cookies or URLs listed on the target history data 57.

For example, the distribution setting processor 39 may be configured to perform setting with respect to the advertisement distribution system 90 for advertisement distribution so that advertisement is distributed through the advertisement frames on web pages where there is more amount of access than a reference by the consumers indicated on the second target list 55.

Alternatively, the distribution setting processor 39 may be configured to perform setting with respect to the advertisement distribution system 90 for advertisement distribution so that advertisement is distributed through the advertisement frames of the web pages specified by a user through the input device 13 among the web pages corresponding to the Cookies or URLs listed in the target history data 57.

The distribution setting processor 39 may access a page for setting distribution conditions, provided by the advertisement distribution system 90 via the communication device 19 and Internet, and automatically or in response to the operation by a user though the input device 13 perform setting for advertisement distribution.

As a known advertisement distribution system, an advertisement distribution system has been known in which, when Cookies or URLs are set as distribution conditions, advertisement is distributed from the web pages corresponding to the Cookies or the URLs, and further through advertisement frames of the web pages having a strong relation with the aforementioned web pages. Accordingly, the distribution setting processor 39 can perform setting for advertisement distribution by setting a part of or the entirety of the Cookies or URLs indicated in the target history data 57 as the distribution conditions in the advertisement distribution system 90.

The distribution setting processor 39 may be configured to perform setting, after converting the Cookies indicated in the target history data 57 into the URLs, the converted URLs with respect to the advertisement distribution system 90 as distribution conditions. In this case, the distribution setting processor 39 may access a server storing the relationship between the Cookies and the URLs to convert the Cookies into the URLs.

In a case where the web access database 45 has access history data of a further larger consumer group including the second consumer group, the extraction processor 37 may be configured to create and output the above-described target history data 57 in which the Cookies or URLs indicated in the access history data of the consumers having access history similar to the access history of the consumers indicated in the second target list 55 are added in addition to the Cookies or URLs indicated in the access history data of the consumers indicated in the second target list 55. This addition rationally and significantly expands the advertisement distribution targets.

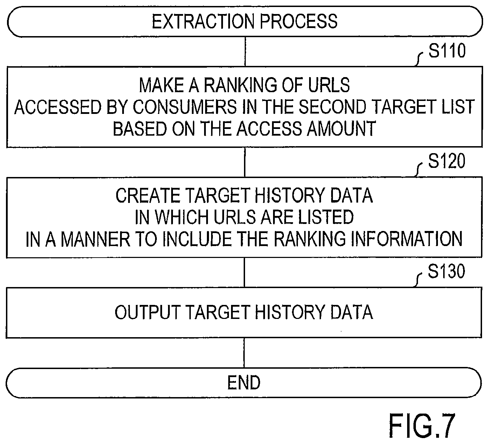

Alternatively, the extraction processor 37 may be configured to create and output the target history data 57 in the process shown in FIG. 7. The process shown in FIG. 7 is performed on the assumption that the web access database 45 has a list of URLs of the web pages accessed by each consumer as the access history data.

According to the process shown in FIG. 7, when the second target list 55 is provided from the replacement processor 35, the extraction processor 37 makes a ranking of the URLs accessed by the consumers listed on the second target list 55 (S110).

In S110, the extraction processor 37 may refer to the web access database 45 to identify the URLs accessed by the consumers listed on the second target list 55. Hereinafter, the consumers listed on the second target list 55 will be also expressed as targets, and the URLs accessed by the consumers listed on the second target list 55 will be also expressed as target URLs.

In S110, the extraction processor 37 further specifies the total number SX of the above-described targets and specifies the total number SY of the consumers in the entirety of the second consumer group including the targets. In addition, the extraction processor 37 specifies, for each of the URLs belonging to the target URLs, the number X of consumers who have accessed the URL among the targets, and the number Y of consumers who have accessed to the URL among the consumers in the entirety of the second consumer group including the targets.

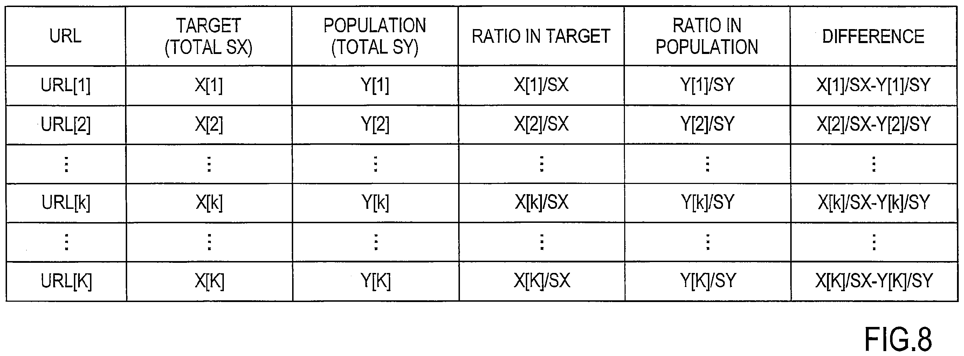

Furthermore, the extraction processor 37 calculates, as shown in FIG. 8, for each of the URLs belonging to the target URLs, the access amount (X/SX) to the URL of the targets with respect to the total number SX as a ratio in target. X[k](k=1, 2, ..., K), shown in FIG. 8, represents the number X of consumers among the targets who have accessed to the k-th URL belonging to the target URLs. Y[k] represents the number Y of consumers among the second consumer group who have accessed to the k-th URL.

Additionally, the extraction processor 37 calculates, for each of the URLs belonging to the target URLs, the access amount (Y/SY) to the URL of the consumers in the second consumer group with respect to the above-described total number SY, as a ratio in population. Furthermore, the extraction processor 37 calculates, for each of the URLs belonging to the target URLs, the difference of these ratios (X/SX-Y/SY).

The extraction processor 37 makes a ranking of the target URLs in the descending order of the difference, in which the URL with the largest difference is ranked the first. A larger difference indicates that the corresponding URL has higher degree of access dependency by the targets among the consumers in the second consumer group. In other words, a larger difference indicates that the amount of access to the corresponding URL is made more by the targets. The magnitude of this difference corresponds to the magnitude of access amount (relative amount) by the targets in comparison with the amount of access to the web data by the entirety of the second consumer group.

When finishing this ranking, the extraction processor 37 creates target history data 57 in which, among the target URLs, URLs ranked the first to the specified ranking are listed in the descending order (that is, descending order of the magnitude of the difference) (S120). By writing the URLs in the order corresponding to the above-described ranking, information of the ranking can be included in the target history data 57. Alternatively, the target history data 57 may be configured such that all of the target URLs are listed in a manner to include the above-described ranking information. The extraction processor 37 may be configured to output the target history data 57 in which the URLs are ranked in such manner (S130).

In a case where such target history data 57 is created, the distribution setting processor 39 may set, based on the target history data 57, only the URLs having rankings indicated in the target history data 57 higher than a reference (for example, the above-described specified ranking) as a distribution condition into the advertisement distribution system 90, and thereby perform the setting of advertisement distribution such that advertisement is selectively distributed to advertisement frames of web pages corresponding to these URLs and web pages related to the aforementioned web pages.

The above has described the information processing system 1 of the present embodiment. According to this information processing system 1, the consumers who are advertisement distribution targets selected based on the purchase database 41 of the first consumer group without web access history are related to the consumers of the second consumer group with web access history based on the similarity of the purchasing behaviors so as to extract the web access history corresponding to these consumers. Then, the target history data 57 is created in which the web access history of the consumers is written in the form of Cookies or URLs.

In determining advertisement distribution targets, referring to purchasing behaviors is important. Nevertheless, the behavior of the consumers on the network (on-line behavior) cannot be identified by purchasing behaviors alone. However, according to the information processing system 1 of the present embodiment, the consumers, who are the advertisement distribution targets, determined from the purchasing behaviors can be altered with consumers whose purchasing behavior and on-line behavior can be identified and the web access history of the corresponding consumers can be extracted. Accordingly, distribution conditions can be set in an advertisement distribution system by, not in an intuitive, but in a logical and technical approach with data. Consequently, a greater advertisement effect can be achieved for advertisement distribution through websites than before.

Particularly, according to the present embodiment, since the first purchase database 41 and the second purchase database 43 are combined to extract the web access history that corresponds to the consumers in the first consumer group, even when the purchase data of the product corresponding to the advertisement does not exists in the second purchase database 43, from the similarity in the purchase history of other product, the web access history corresponding to the consumers who are assumed to have purchased the product corresponding to the advertisement can be suitably extracted.

Accordingly, the information processing system 1 according to the present embodiment can be said more versatile and convenient than an embodiment where the consumers are determined to be advertisement distribution targets from the second purchase database 43 without using the first purchase database 41 to extract the web access history.

It is to be noted that the total number SY calculated in S 110 of the above-described embodiment may be the number of consumers in the second consumer group excluding the targets. In this case, the above-described number Y of consumers calculated for each URL may be the number Y of consumers who have accessed to the URL among the consumers of the second consumer group excluding the targets.

### [Second Embodiment]

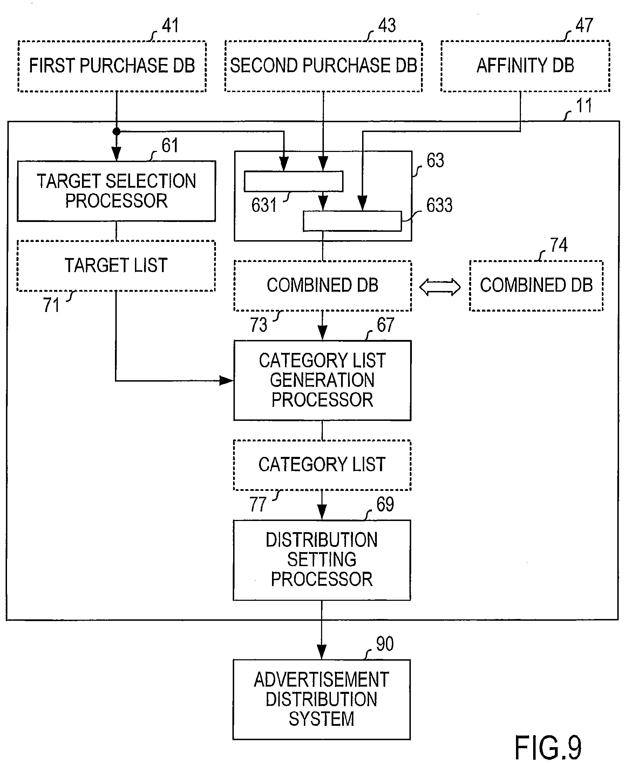

Subsequently, an information processing system 1 according to a second embodiment will be described. The information processing system 1 according to the second embodiment has a hardware configuration identical to the configuration in the first embodiment. Accordingly, the description of the hardware configuration will be omitted below, and the function of the processing device 11, which is the distinctive feature of the present embodiment, will be described with reference to FIGs. 9 to 14. In the present embodiment, the components with the same referential numbers as in the first embodiment may be understood to be basically configured in the same manner as the components with the same referential numbers in the first embodiment.

By executing programs, the processing device 11 according to the present embodiment serves, as shown in FIG. 9, as a target selection processor 61, a data fusion processor 63, a category list generation processor 67, and a distribution setting processor 69.

The target selection processor 61 is configured in the same manner as the target selection processor 31 in the first embodiment. That is, with reference to the first purchase database 41, the target selection processor 61 selects consumers from the first consumer group who show consumption behavior that satisfies the conditions specified by a user through the input device 13. Then, the target selection processor 61 creates a target list 71 in which the first identification codes respectively assigned to the selected consumers are written. The target selection processor 61 is configured to input this target list 71 into the category list generation processor 67.

The data fusion processor 63 comprises a first processor 631 and a second processor 633. The first processor 631 is configured to combine the first purchase database 41 and the second purchase database 43 in the same way as the data fusion processor 63 of the first embodiment. The second processor 633 is configured to combine the second purchase database 43 and an affinity database 47 with the same data fusion technology.

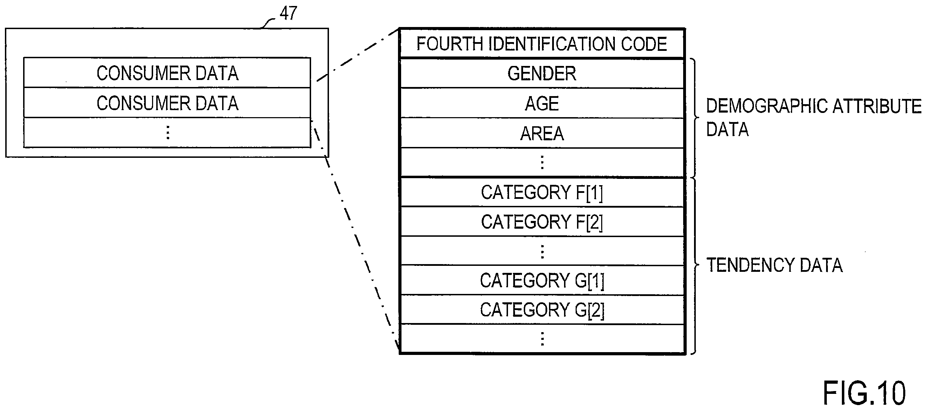

As shown in FIG. 10, the affinity database 47 is configured to have, for each consumer belonging to a third consumer group, consumer data with attribute data, representing demographic attributes of a consumer, and tendency data, representing the reactivity of the consumer to each of affinity categories. This affinity database 47 is a database that can be built based on data available from a company running a search site (for example, Google Inc.). The third consumer group is different from the first and the second consumer groups and may be a group of consumers who use this search site. The tendency data that the affinity database 47 has represents the reactivity of a consumer with respect to each of the affinity categories based on the on-line behavior of the consumer.

The affinity categories include categories related to preference and interest of a consumer. The consumer data for each consumer that the affinity database 47 has is, in particular, consumer data for each group of consumers categorized by the combination of the gender, age, and area. That is, the consumer data has, parameters representing the gender, age (range), and area of the corresponding group of consumers as the above-described attribute data.

This consumer data further has, regarding predetermined affinity categories F[1], F[2], ...G[1], G[2], ..., a parameter for each of the affinity categories that represents the reactivity of corresponding consumers with respect to the affinity category as the above-described tendency data. The reactivity may be the number of Cookies, among the Cookies of the corresponding consumers, that indicates the access to the web page belonging to the corresponding affinity category and is scored or normalized by a specified scale. For example, the reactivity may be defined such that, when the number of Cookie is zero, the reactivity indicates zero, and, while the maximum value is one, when the number of Cookies is many, a larger value is adopted. This reactivity indicates the degree of preference and interest of the consumers with respect to the corresponding affinity category. The example of affinity categories includes a sports category, such as soccer, baseball, and basketball, and a category for the type of cars, such as coupes, convertibles, and SUVs. To this consumer data, an identification code of the corresponding consumer (the corresponding group of consumers) can be attached. Hereinafter, this identification code is expressed as a fourth identification code.

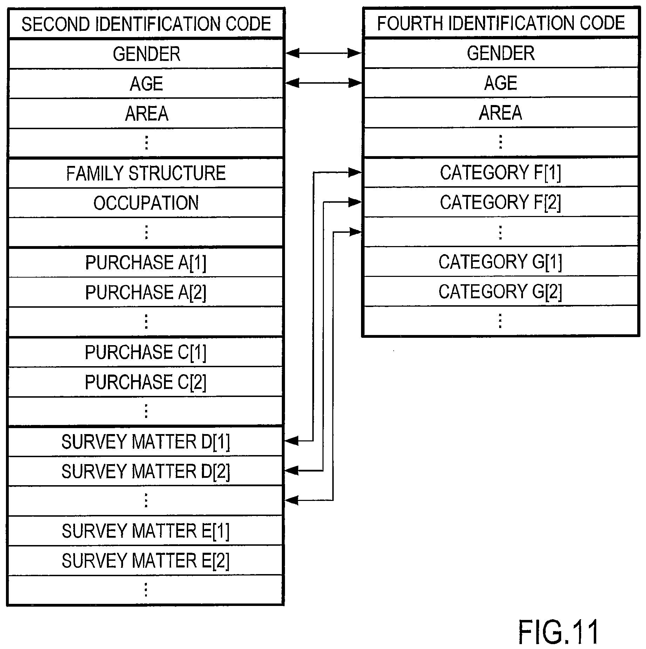

### The second processor 633 of the data fusion processor 63 can combine, as shown in FIG. 11, the second purchase database 43 and the affinity database 47 by using parameters representing the age and gender and parameters D[1], D[2], ... related to the preferences and interests that each of the consumer data has in the second purchase database 43, parameters representing the age (range) and gender that each of the consumer data has in the affinity database 47, and parameters F[1], F[2], ... of the affinity categories corresponding to the parameters D[1], D[2], ... related to the above-described preferences and interests as margins so that the consumer data similar in feature represented by the margins are combined with each other. The degree of similarity can be evaluated by, for example, the cosine distance between the feature vectors having the parameters corresponding to the margins as elements.

The data fusion processor 63 creates combined database 73 in which the first purchase database 41, the second purchase database 43, and the affinity database 47 are combined through the operation of the above-described the first processor 631 and the second processor 633.

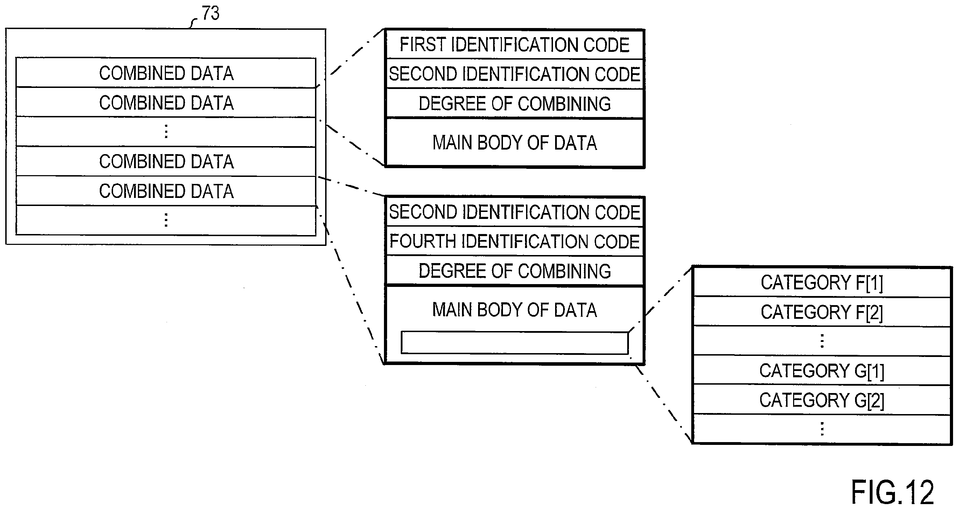

The combined database 73 has, as shown in FIG. 12, combined data for each combination of the consumer data in the first purchase database 41 and the consumer data in the second purchase database 43 that are combined with each other, and each combination of the consumer data in the second purchase database 43 and the consumer data in the affinity database 47 that are combined with each other. This combined data has, similarly to the first embodiment, a pair of the identification codes of the combined consumer data and parameters representing the degree of combination between these consumer data. The combined data may have the main body of the combined consumer data. In this case, the combined data may have, as shown in FIG. 12, tendency data associated with the second identification code, and the tendency data represents reactivity of corresponding consumer for each of the affinity categories.

In the combined database 73 created as described above, the category list generation processor 67 refers to the parameter representing the reactivity for each of the affinity categories that the tendency data has, which is related to the first identification code of each of the consumers who are the advertisement distribution targets listed in the target list 71, and creates a category list 77 in which affinity categories higher in the reactivity than a reference are listed among the consumers who are the advertisement distribution targets and listed in the target list 71.

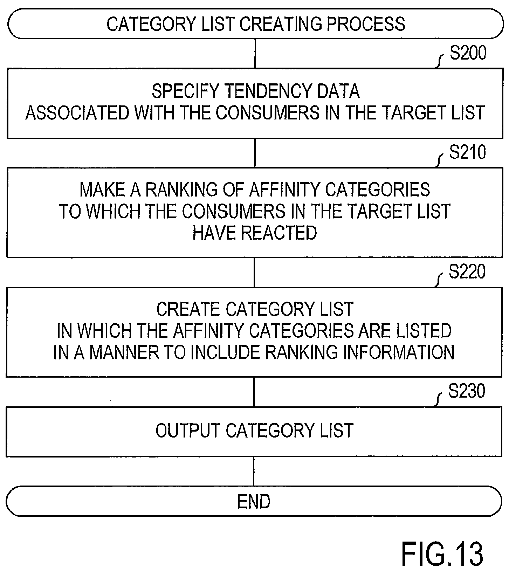

For example, the category list generation processor 67 may be configured to perform a category list creating process shown in FIG. 13. In this case, when the combined database 73 is created and the target list 71 is provided, the category list generation processor 67 specifies the tendency data related to the consumers listed in the target list 71 (S200), and makes a ranking of the affinity categories with reaction by these consumers (S210).

In S200, for each of the consumers listed in the target list 71, based on the first identification code of the consumer, the category list generation processor 67 refers to the combined database 73 to identify the identification code (the second identification code) of the consumer data in the second purchase database 43 combined with the consumer data of the consumer that the first purchase database 41 has. Moreover, the category list generation processor 67 refers to the combined database 73 to identify the identification code (the fourth identification code) and the tendency data of consumer data in the affinity database 47 combined with the consumer data of this second identification code. In this manner, for each of the consumers listed in the target list 71, the category list generation processor 67 refers to the relation among the first identification code, the second identification code, and the fourth identification code that the combined database 73 has, to identify the tendency data related to this consumer (S200).

The category list generation processor 67 refers to the tendency data specified as described above in S200 to identify the affinity categories having reaction from the consumers listed in the target list 71 (S210). Specifically, the category list generation processor 67 can identify the affinity category, in the above-described tendency data, that indicates values in the reactivity larger than a reference (a specified reference value equal to or larger than zero) as the affinity categories with reaction (S210). Hereinafter, the consumers listed in the target list 71 will be also expressed as targets, and the affinity categories having reaction from the consumers listed in the target list 71 will be also expressed as target categories.

In S210, the category list generation processor 67 further specifies the total number SX of the targets and the total number SY of consumers in the entirety of the second consumer group including the targets. Additionally, the category list generation processor 67 specifies, for each of the affinity categories belonging to the target categories, the number X of consumers, among the targets, who have reacted to the affinity category and the number Y of consumers in the second consumer group including the targets who have reacted to the affinity category.

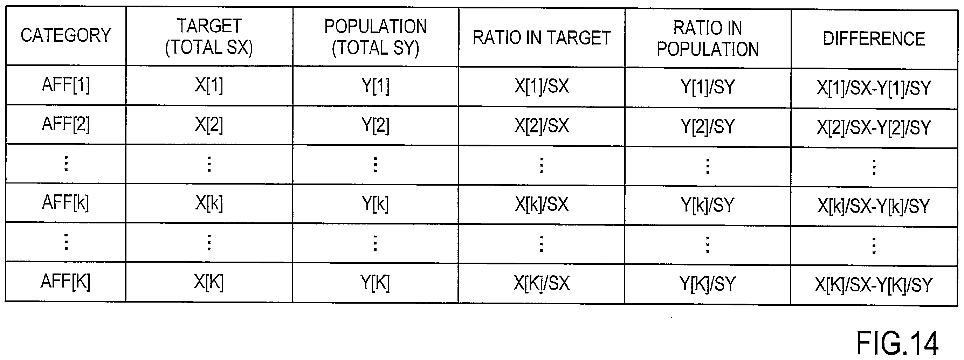

Furthermore, the category list generation processor 67, as shown in FIG. 14, calculates, for each of the affinity categories belonging to the target categories, the ratio (X/SX) of the number X of consumers, among the targets, who have reacted to the affinity category with respect to the above-described total number SX as a ratio in target. X[k] (k=1, 2, ..., K) shown in FIG. 14 represents the number X of consumers, among the targets, who have reacted to the k-th affinity category belonging to the target categories. Y[k] represents the number Y of consumers in the second consumer group who have reacted to the k-th affinity category.

Additionally, the category list generation processor 67 calculates, for each of the affinity categories belonging to the target categories, the ratio (Y/SY) of the number Y of consumers in the second consumer group who have reacted to the affinity category with respect to the above-described total number SY as ratio in population. Furthermore, the category list generation processor 67 calculates the difference (X/SX-Y/SY) of these ratios for each of the affinity categories belonging to the target categories.

The category list generation processor 67 makes a ranking of each affinity category belonging to the target categories in the descending order of the difference in which the affinity category with the largest difference is ranked the first. A larger difference indicates that the reaction to corresponding affinity category comes more from the targets.

When this ranking is finished, the category list generation processor 67 creates the category list 77 in which, among the target categories, the affinity categories ranked the first to the specified ranking are listed in the descending order of the ranking (that is, in the descending order of the difference) (S220). By writing the affinity categories in the order corresponding to the above-described order, the above-described ranking information can be included in the category list 77. Alternatively, the category list 77 may be configured such that all of the target categories are listed in a manner to include the above-described ranking information. The category list generation processor 67 may be configured to output the category list 77, in which the affinity categories are ranked in such manner, to the distribution setting processor 69 (S230).

The category list generation processor 67 may be configured to show the category list 77 as created above to a user through the display device 15 or to save the category list 77 in the storage device 17.

The distribution setting processor 69 is configured to, based on the category list 77 as created above, perform setting for advertisement distribution with respect to the advertisement distribution system 90 so that advertisement is distributed through the advertisement frames of the web pages corresponding to the affinity categories listed in the category list 77.

In the same manner as the distribution setting processor 39, the distribution setting processor 69 accesses the set-up page for distribution conditions provided by the advertisement distribution system 90 through the communication device 19 to perform setting for the advertisement distribution. For example, the distribution setting processor 69 may perform setting for the advertisement distribution by setting the affinity categories, having rankings indicated in the category list 77 higher than the reference, in the advertisement distribution system 90 as the distribution conditions.

As for a known advertisement distribution systems, an advertisement distribution system is known in which, upon affinity categories being set as distribution conditions, advertisement is distributed from websites through the advertisement frames of the web pages corresponding to the affinity categories.

The above has described the information processing system 1 according to the present embodiment. According to this information processing system 1, based on the similarity in the purchasing behavior, the consumers in the first consumer group without data regarding preference and interest are connected with the consumers in the second consumer group with data regarding preference and interest.

Furthermore, according to this information processing system 1, the consumers in the second consumer group are related, based on the similarity in feature related to preference and interest, with tendency data in the affinity database 47. Based on a parameter representing the reactivity for each of the affinity categories indicated by the tendency data indirectly related to each of the consumers who are the advertisement distribution targets in the first consumer group, the information processing system 1 specifies the affinity categories, to which these consumers have reacted, and creates the category list 77 in which these affinity categories are listed.

In determining advertisement distribution targets, referring to purchasing behaviors is important. Nevertheless, the behaviors of the consumers on the network (on-line behavior) cannot be identified by the purchasing behavior alone. However, according to the information processing system 1 of the present embodiment, affinity categories reacted by the on-line behavior of the consumers corresponding to the consumers who are the advertisement distribution targets can be identified and the consumers who are the advertisement distribution targets are determined based on their purchase behavior. Accordingly, distribution conditions can be set in the advertisement distribution system that distributes advertisement through websites by, not in an intuitive, but in a logical and technical approach with data. Consequently, a greater advertisement effect can be achieved for advertisement distribution through websites than before.

Particularly, according to the present embodiment, since the first purchase database 41 and the second purchase database 43 are combined, even when the purchase data of the product corresponding to the advertisement does not exist in the second purchase database 43, from the similarity in the purchase history for other products, the affinity categories can be identified that correspond to the consumers who are estimated to purchase the product corresponding to the advertisement. Accordingly, the information processing system 1 of the present embodiment is more convenient than a system that determines the consumers who are the advertisement distribution targets from the second purchase database 43 without using the first purchase database 41 and identify affinity categories.

It is to be noted that, in S210, the total number SY calculated by the category list generation processor 67 may be, the total number of consumers in the second consumer group excluding the targets. In this case, the above-described number Y of consumers that the category list generation processor 67 calculates for each of the affinity categories may be the number Y of consumers who have reacted to the affinity categories among the consumers in the second consumer group excluding the targets.

### [Other Embodiments]

The present disclosure is not limited to the above-described embodiments but may be carried out in various manners.

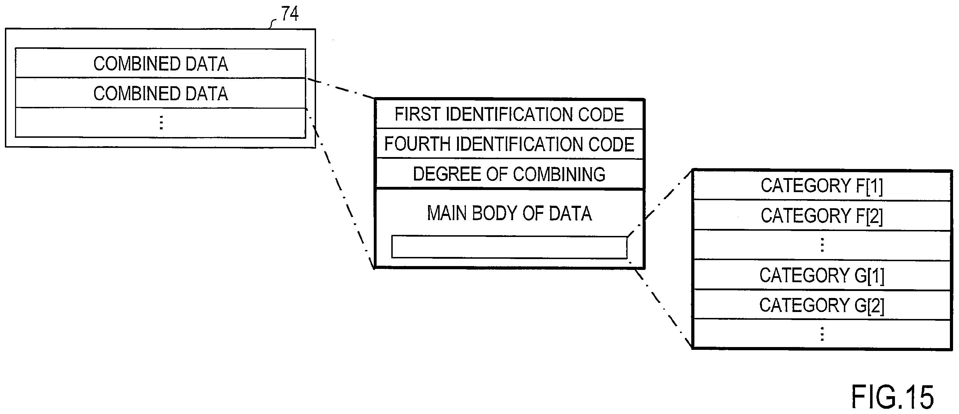

For example, in the second embodiment, through the second purchase database 43, the first purchase database 41 and the affinity database 47 are combined by the data fusion process. However, the second purchase database 43 does not have to be used. That is, the combined database 73 may be altered with the combined database 74 which is a database in which the first purchase database 41 and the affinity database 47 are directly combined (see FIG. 15).

In this case, the data fusion processor 63 can combine the first purchase database 41 and the affinity database 47 by combining consumer data similar in feature related to the demographic attributes between the first purchase database 41 and the affinity database 47. Then, based on the target list 71, the category list generation processor 67 may refer to the tendency data associated with each of the consumers listed in the target list 71 within the combined database 74 and identify the affinity categories to which the consumers have reacted.

Additionally, the target history data 57 and the category list 77 in the first and the second embodiments may be configured to additionally have data representing the demographic attributes of the corresponding consumers.

The first embodiment discloses the information processing system 1 that is suitable for distributing advertisement with advertisement frames in web pages. However, the information processing system 1 of the first embodiment may be modified in a suitable configuration for other type of advertisement distribution.

The web pages are one example of electronic information media. Accordingly, the information processing system 1 according to the first embodiment may be modified to a system suitable for advertisement distribution with advertisement frames of electronic information media. Examples of electronic information media include an application program with advertisement to be installed in information terminals and a digital signage. Recently, displaying electronic advertisement on automotive navigation devices or domestic electrical appliances have been considered. The examples of electronic information media also includes such devices.

In this case, the information processing system 1 is configured to create and output the target history data 57 based on, instead of the web access database 45, a history database 46 having access history data representing access history to the information media for each of the consumers belonging to the second consumer group. The access history may be usage history or viewing history of information media by consumers. That is, the extraction processor 37 may be configured to extract, the access history data of the consumers indicated the second target list 55 from the history database 46 and, based on the access history data, to create and output the target history data 57 representing the access history to the information media by the consumers who are the advertisement distribution targets.

Furthermore, the information media is not limited to an electronic medium. Access history data including the access history to information media such as non-electronic newspapers, magazines, signage and so on may be stored in the history database 46. In this case, access history data may be partially manually created.

Access history to web pages may be represented with URLs as described above. An URL is an address on an on-line space (network space) and can be also called information representing the position of web page on an on-line space. Being understood from the above, the access history data may be data representing the access history to various locations on an on-line space. Furthermore, the space may be expanded to an off-line space, in other words, real space (space in the real world). That is, the history database 46, replaced for the web access database 45, may be configured to have, for each of the consumers belonging to the second consumer group, access history data representing the access history of the consumers to one or more locations in at least one of the real space or the on-line space. The access history to one or more locations on the on-line space may be represented with URLs to be accessed. The access history to one or more locations on the real space may be represented with GPS position trajectory of the consumers. The target history data 57 may include theses access history. The access history data that the web access database 45 and the history database 46 in place of the web access database 45 have for each of the consumers belonging to the second consumer group may be incorporated in the consumer data of corresponding consumers in the second purchase database 43. That is, the web access database 45 and the history database 46 in place of the web access database 45 may be incorporated in the second purchase database 43 and does not have to be provided separately from the second purchase database 43. In this case, the third identification codes and the conversion table are not necessary.

Moreover, the first purchase database 41 and the second purchase database 43 may be databases that maintain data processed for privacy protection, as the consumer data for each consumer. For example, the consumer data may be data in which the data is anonymized not to contain personal identification information or given a temporary name. For another example, the consumer data may be anonymous data in which the accuracy of the information that can identify individuals is decreased or noise is intentionally introduced to the information that can identify individuals. Examples of anonymous data include data in which a portion of the original data for each consumer is stochastically replaced, or the original data of each consumers is replaced with artificial data that is statistically similar.

The first purchase database 41 and the second purchase database 43 may be configured to have, as consumer data for each consumer, consumer data for each cluster which is a group of people. Consumer data for each cluster may be anonymized data by representing the feature of people belonging to the cluster with a statistic value or the average value. The consumer data of each cluster in this case may be interpreted as consumer data of a virtual person corresponding to the cluster.

Furthermore, in the above-described embodiment, the first purchase database 41 and the second purchase database 43 are combined. This combining does not deny the intervening of another database between the first purchase database 41 and the second purchase database 43. That is, the first purchase database 41 and the second purchase database 43 may be combined through another purchase database.

Furthermore, in an embodiment in which mobile applications are assumed to be the advertisement media, a terminal identification number such as IDFA or an individual identification number represented by a service identification number, such as a log-in ID for an application may be used instead of Cookies. These individual identification numbers become useful for to record access history in addition to the identification number for an accessed application, or identification number of advertisement.

In first embodiment and the second embodiment, the information processing system including the functions up to setting for advertisement distribution is introduced. Analysis of target history data 57 and the category list 77 enables target profiling in an aspect other than purchasing behavior. Accordingly, the use of the technology according to the present disclosure is not limited to setting for advertisement distribution, but may be also used for other usage, such as target profiling.

The function of one component in the above-described embodiment may be distributed to several components. The function of several components may be integrated in one component. A part of the configuration of the above-described embodiment may be omitted. At least one part of the configuration of the above-described embodiment may be added to or replaced by other configuration of the above-described embodiment. Any embodiments included in the technical idea specified from the language of the claims are embodiments of the present disclosure.

### [Correspondence Relation]

The correspondence relation between the terms is as follows. The target selection processors 31, 61 correspond to one example of the acquisition unit. The data fusion processor 33 and the replacement processor 35 in the first embodiment, and the data fusion processor 63 and the category list generation processor 67 in the second embodiment (the part in which the process in S200 is performed) all correspond to one example of the determination unit. The extraction processor 37 and the category list generation processor 67 (the part in which the processes in S210-S230 are performed) all correspond to one example of the output unit. The distribution setting processor 39 correspond to one example of the setting unit. The data fusion processor 63 corresponds to one example of the combining unit. The first processor 631 that the data fusion processor 63 comprises corresponds to one example of the first combining unit, while the second processor 633 corresponds to one example of the second combining unit.

## Claims

1. A system for information processing comprising:
an acquisition unit configured to acquire a consumer list that is a list of consumers selected from a first consumer group;
a determination unit configured to determine, based on a first database and a second database, consumers in a second consumer group at least similar in feature to the consumers represented in the consumer list as targets, the second consumer group being different from the first consumer group, the first database representing features related to consumption behavior of each of consumers belonging to the first consumer group, the second database representing features related to consumption behavior of each of consumers belonging to the second consumer group; and
an output unit configured to output, based on data representing one of tendency or behavior history of each of the consumers belonging to the second consumer group, data representing one of tendency or behavior history of the targets as target related data.

2. The system for information processing according to claim 1,
wherein each of the first consumer group and the second consumer group is a group of consumers defined on an individual basis or on a cluster basis, or a group of consumers defined on an individual basis and on a cluster basis being mixed therein,
wherein each of the first database and the second database is a database representing features related to consumption behavior on the individual basis, features related to consumption behavior on the cluster basis, or features related to consumption behavior on the individual basis and on the cluster basis as features related to consumption behavior of each of the consumers belonging to the corresponding consumer group.

3. The system for information processing according to claim 1 or 2, wherein at least one of the first database or the second database stores the features related to the consumption behavior of at least some consumers as anonymous data.

4. The system for information processing according to any one of claims 1 to 3,
wherein the first database comprises, for each of the consumers belonging to the first consumer group, feature data representing features related to demographic attributes and consumption behavior of the consumer,
wherein the second database comprises, for each of the consumers belonging to the second consumer group, feature data representing features related to demographic attributes and consumption behavior of the consumer, and
wherein the determination unit has a combining function with which the first database and the second database are combined by combining the feature data of consumers at least similar in feature between the first database and the second database, and determines, based on database combined with the combining function, consumers corresponding to the feature data in the second database combined with feature data of the consumers represented in the consumer list as targets.

5. The system for information processing according to any one of claims 1 to 4,
wherein the data representing one of tendency or behavior history of each of the consumers belonging to the second consumer group is history data, representing at least one of access history of each of the consumers belonging to the second consumer group to at least one of electronic information media or non-electronic information media, or access history of each of the consumers belonging to the second consumer group to locations on at least one of a real space or an on-line space, and
wherein, based on the history data of each of the consumers belonging to the second consumer group, the output unit outputs history data representing access history of the targets as the target related data.

6. The system for information processing according to claim 5, wherein the output unit makes a ranking of, among access destinations including at least one of one or more information media or one or more locations, the access destinations accessed more by the targets in the second consumer group in terms of access dependency based on the history data, in a descending order from the access destinations with higher degrees of access dependency by the targets, and outputs data including information on the ranking as the target related data.

7. The system for information processing according to claim 5, wherein, regarding access destinations including at least one of one or more information media or one or more locations, the output unit makes a ranking of the access destinations accessed more by the targets, in comparison in access amounts to the access destinations with one of an entirety of the second consumer group or the consumers belonging to the second consumer group excluding the targets, in a descending order from the access destinations with higher access amounts by the targets, and outputs data including information on the ranking as the target related data.

8. The system for information processing according to claim 5, wherein, regarding access destinations including at least one of one or more information media or one or more locations, the output unit makes a ranking of the access destinations accessed by the targets in the second consumer group according to the history data in a descending order of the access destinations with higher degree of access dependency by the targets in the second consumer group, and outputs data representing access history to the access destinations with rankings higher than a reference as the target related data.

9. The system for information processing according to claim 5, wherein, regarding access destinations including at least one of one or more information media or one or more locations, the output unit makes a ranking of the access destinations accessed more by the targets, in comparison in access amounts to the access destinations with one of an entirety of the second consumer group or the consumers belonging to the second consumer group excluding the targets, in a descending order from the access destinations with higher access amounts by the targets, and outputs data representing access history to the access destinations with rankings higher than a reference as the target related data.

10. The system for information processing according to any one of claims 5 to 9, wherein the electronic information media are web data, and
wherein the target related data is history data representing access history of the targets to the web data.

11. The system for information processing according to claim 10 further comprising a setting unit configured to perform setting for advertisement distribution, based on the target related data outputted from the output unit, such that advertisement is distributed through at least one of advertisement frames of websites that provide web data having access history by the targets or advertisement frames of websites that provide web data related to the aforementioned web data, the setting being performed with respect to an advertisement distribution system that distributes advertisement through the web site.

12. The system for information processing according to any one of claims 5 to 9,
wherein the target related data is history data representing access history to electronic information media by the targets,
the system for information processing further comprising a setting unit configured to perform setting for advertisement distribution, based on the target related data outputted from the output unit, such that advertisement is distributed through advertisement frames of at least one of information media having access history by the targets or related information media, the setting being performed with respect to an advertisement distribution system that distributes advertisement through the information media.

13. The system for information processing according to any one of claims 1 to 4,
wherein the data representing one of tendency or behavior history of each of the consumers belonging to the second consumer group is tendency data that represents at least one of interest or preference of each of the consumers belonging to the second consumer group, and
wherein, based on the tendency data of each of the consumers belonging to the second consumer group, the output unit outputs a list of at least one of interest or preference, which the targets are estimated to have, as the target related data.

14. The system for information processing according to claim 13 wherein the output unit outputs the list of at least one of interest or preference which the targets are estimated to have, along with information representing demographic attributes of the targets.

15. The system for information processing according to claim 13 or 14,
wherein the tendency data of each of the consumers is data that represents, for each of predetermined categories, a degree of interest or preference of the consumer to the category, and
wherein the output unit makes a ranking of, among the categories, the categories with higher degree of interest or preference by the targets, in comparison with one of an entirety of the second consumer group or the consumers belonging to the second consumer group excluding the targets based on the tendency data, in a descending order from categories with higher degree of interest or preference by the targets, and outputs a list of categories including information on the ranking as the list of at least one of interest or preference that the targets are estimated to have.

16. The system for information processing according to claim 13 or 14,
wherein the tendency data of each of the consumers is data that represents, for each of predetermined categories, a degree of interest or preference of the consumers to the category, and
wherein the output unit makes a ranking of, among the categories, the categories with higher degree of interest or preference by the targets, in comparison with one of an entirety of the second consumer group or the consumers belonging to the second consumer group excluding the targets based on the tendency data, in a descending order from categories with higher degree of interest or preference by the targets, and outputs a list of categories with rankings higher than a reference as the list of at least one of interest or preference that the targets are estimated to have.

17. A system for information processing comprising:
a first combining unit configured to combine a first database and a second database, the first database comprising, for each of consumers belonging to a first consumer group, feature data representing features related to demographic attributes and consumption behavior of the consumer, the second database comprising, for each of consumers belonging to a second consumer group that is different from the first consumer group, feature data representing features related to demographic attributes, consumption behavior, and at least one of interest or preference of the consumer, wherein the first combining unit combines the first database and the second database by combining feature data of consumers at least similar in feature related to the demographic attributes and the consumption behavior between the first database and the second database;
a second combining unit configured to combine the second database and a third database, the third database comprising, for each of consumers belonging to a third consumer group that is different from the first consumer group and the second consumer group, feature data representing features related to demographic attributes and at least one of interest or preference of the consumer, wherein the second combining unit combines the second database and the third database by combining feature data of consumers at least similar in feature related to the demographic attributes and the at least one of interest or preference between the second database and the third database;
an acquisition unit configured to acquire a consumer list that is a list of consumers selected from the first consumer group; and
an output unit configured to output a list of at least one of interest or preference associated with the consumers represented in the consumer list in the database combined by the first combining unit and the second combining unit.

18. A system for information processing comprising:
a combining unit configured to combine a first database and a second database, the first database comprising, for each of consumers belonging to a first consumer group, feature data representing features related to demographic attributes and consumption behavior of the consumer, the second database comprising, for each of consumers belonging to a second consumer group that is different from the first consumer group, feature data representing features related to demographic attributes and at least one of interest or preference of the consumer, wherein the combining unit combines the first database and the second database by combining feature data of consumers at least similar in feature related to the demographic attributes between the first database and the second database;
an acquisition unit configured to acquire a consumer list that is a list of consumers selected from the first consumer group; and
an output unit configured to output a list of at least one of interest or preference associated with the consumers represented in the consumer list in the database combined by the combining unit.

19. A method comprising:
acquiring a consumer list that is a list of consumers selected from a first consumer group;
determining, based on a first database and a second database, consumers in a second consumer group at least similar in feature to the consumers represented in the consumer list as targets, the second consumer group being different from the first consumer group, the first database representing features related to consumption behavior of each of consumers belonging to the first consumer group, the second database representing features related to consumption behavior of each of consumers belonging to the second consumer group; and
outputting, based on data representing one of tendency or behavior history for each of the consumers belonging to the second consumer group, data representing one of tendency or behavior history of the targets as target related data.

20. A method comprising:
combining a first database and a second database, the first database comprising, for each of consumers belonging to a first consumer group, feature data representing features related to demographic attributes and consumption behavior of the consumer, the second database comprising, for each of consumers belonging to a second consumer group that is different from the first consumer group, feature data representing features related to demographic attributes, consumption behavior, and at least one of interest or preference of the consumer, wherein feature data of consumers at least similar in feature related to the demographic attributes and the consumption behavior between the first database and the second database are combined;
combining the second database and a third database, the third database comprising, for each of consumers belonging to a third consumer group that is different from the first consumer group and the second consumer group, feature data representing features related to demographic attributes and at least one of interest or preference of the consumer, wherein feature data of consumers at least similar in feature related to the demographic attributes and at least one of the interest or the preference between the second database and the third database are combined;
acquiring a consumer list that is a list of consumers selected from the first consumer group; and
outputting a list of at least one of interest or preference associated with the consumers represented in the consumer list in the combined database.

21. A method comprising:
combining a first database and a second database, the first database comprising, for each of consumers belonging to a first consumer group, feature data representing features related to demographic attributes and consumption behavior of the consumer, the second database comprising, for each of consumers belonging to a second consumer group that is different from the first consumer group, feature data representing features related to demographic attributes and at least one of interest or preference of the consumer, wherein feature data of consumers at least similar in feature related to the demographic attributes between the first database and the second database are combined;
acquiring a consumer list that is a list of consumers selected from the first consumer group; and
outputting a list of at least one of interest or preference associated with the consumers represented in the consumer list in the combined database.

22. A program for causing a computer to perform a method according to claims 19 to 21.

23. A recording medium that stores a program according to claim 22.
